# EUROPÄISCHE PATENTSCHRIFT

(11) **EP 1 975 853 B1**
(45) Veröffentlichungstag und Bekanntmachung des Hinweises auf die Patenterteilung: **02.12.2009**
(21) Anmeldenummer: 08003220.4
(22) Anmeldetag: 22.02.2008
(51) Int. Cl.: G06K 13/08

(54) **Kartenlese- und/oder Schreibeinheit**
Device for reading and/or writing cards
Unité de lecture et/ou d'écriture

(30) Priorität: 30.03.2007 DE 102007015335
(43) Veröffentlichungstag der Anmeldung: 01.10.2008
(73) Patentinhaber: Amphenol-Tuchel Electronics GmbH, 74080 Heilbronn (DE)
(72) Erfinder: Tolksdorf, Martina, 74081 Heilbronn (DE); Kerner, Manfred, 74235 Erlenbach (DE)
(74) Vertreter: Schweiger, Johannes

(56) Entgegenhaltungen:
- EP-A- 0 962 879
- WO-A-2004/100047
- DE-A1- 4 331 414
- DE-A1-102006 031 880
- DE-U1- 9 213 283
- JP-A- 2000 090 205

## Beschreibung

Die Erfindung betrifft eine Kartenlese- und/oder Schreibeinheit zum Lesen und/oder Schreiben von Informationen von einer Karte und/oder auf eine Karte, insbesondere Smartcard, mit einem durch eine bewegliche Trennwand in einen Innenbereich mit Lese- und/oder Schreibanschlüssen und einen Außenbereich trennbaren, insbesondere schlitzförmigen, Kartenaufnahmeraum sowie eine Vorrichtung mit einer solchen Karten- und/oder Schreibeinheit.

Solche auch Smartcard-Connectoren genannten Kartenlese- und/oder Schreibeinheiten sind in der DE 102 13 842 B4 beschrieben, wobei als erfindungsgemäße Vorrichtungen Bankterminals oder Kartenlesegeräte zur Bezahlung mit einer Bankkarte in Geschäften in Frage kommen. Bei dem dort beschriebenen Gegenstand sowie dem in der Beschreibungseinleitung beschriebenen Stand der Technik ist eine Schmutzklappe vorgesehen, die zwischen einer Schließposition und einer Öffnungsposition schwenkbar gelagert ist.

Die im Stand der Technik gezeigte Schmutzklappe bietet ausschließlich Schutz gegen Eindringen von Schmutz und Staub, nicht aber gegen Fremdeinwirkung oder mutwilliges Einschieben von Fremdgegenständen wie beispielsweise Geldstücke. Solche Gegenstände verfangen sich im Innenbereich der im Stand der Technik gezeigten Kartenlese- und/oder Schreibeinheit und können ohne Demontage nicht wieder entfernt werden. Kartenaufnahmevorrichtungen sind in der DE 92 13 283 U1, JP 2000 090205 A, DE 43 31 414 A1, EP-A-0 962 879 und DE 10 2006 031880 A1 gezeigt.

Der nächste Stand der Technik, das Dokument WO 2004/10004 A, zeigt eine Kartenaufnahme Vorrichtung mit einem Senkrecht zur Karteneinführrichtung beweglichem, feder gespannten Trennelement.

Aufgabe der Erfindung ist es daher, einerseits das Einschieben von Fremdgegenständen weitgehend zu verhindern und andererseits gleichzeitig einen einfacheren und weniger anfälligen Mechanismus für die Kartenlese- und/oder Schreibeinheit vorzusehen.

Diese Aufgabe wird mit den Merkmalen des Anspruchs 1 gelöst, wobei vorteilhafte Weiterbildungen der Erfindung in den Unteransprüchen angegeben sind.

Grundidee der vorliegenden Erfindung ist es, abweichend von der im Stand der Technik gezeigten Schwenkbewegung, bei der die Schmutzklappe allein durch Druck auf die Klappe bewegt wird, durch eine linear geführte Bewegung einer der Schmutzklappe des Standes der Technik entsprechenden Trennwand für eine einfache und wirksame Trennung des Innen- und Außenbereichs Sorge zu tragen. Vorteil einer Linearbewegung ist der geringere Platzbedarf im Vergleich mit einer Schwenkbewegung. Weiterhin ist die Linearbewegung der Trennwand überraschend mit einem deutlich einfacheren Mechanismus realisierbar. Insbesondere das für einen Schwenkmechanismus erforderliche Rückstellglied kann bei einer einfachen Hin-und-Her- bzw. Auf-und-AbBewegung der Trennwand weniger Komplex ausgeführt werden.

In ihrer allgemeinsten Ausführung betrifft die Erfindung eine Kartenlese- und/oder Schreibeinheit mit den Merkmalen des Patentanspruchs 1 sowie eine Vorrichtung mit den Merkmalen des Patentanspruchs 8.

Indem die Trennwand nämlich quer zu einer Einsteckrichtung der Karte zwischen einer Trennstellung und einer Schreib-/Lesestellung hin und her verschiebbar, insbesondere an Trennwandführungsmitteln entlang geführt, angeordnet ist, ist auf Grund der meist geringen Dicke der Karte eine vergleichsweise geringfügige Bewegung/Verschiebung der Trennwand erforderlich, um der Karte den Zugang zum Innenbereich und damit zu den Lese- und/oder Schreibanschlüssen der Kartenlese-und/oder Schreibeinheit zu gewähren. Mit quer zu der Einsteckrichtung ist dabei eine beliebige Bewegung der Trennwand entlang einer orthogonal zur Einsteckrichtung der Karte liegenden Ebene gemeint, wobei die Ebene auch leicht geneigt sein kann, insbesondere in Richtung des Innenbereichs. Damit ist auch eine Bewegung der Trennwand zur Seite der Karteneinsteckrichtung mit umfasst.

Besonders bevorzugt ist aber die Verschiebbarkeit der Trennwand orthogonal zu einer der beiden Flachseiten der Karte, d.h. in der Regel nach oben oder unten.

Bevorzugt sind Betätigungsmittel zur Verschiebung der Trennwand in einer Öffnen-Richtung von der Trennstellung in die Schreib-/Lesestellung vorgesehen. Diese sind mit Vorteil an der Trennwand direkt angebracht oder einstückig an dieser angeformt. Vorzugsweise sind die Betätigungsmittel durch Einschieben der Karte in den Kartenaufnahmeraum auslösbar oder betätigbar. Das Auslösen oder Betätigen der Verschiebung der Trennwand soll dabei erst möglichst kurz vor Kontaktierung der Trennwand durch die Kartenvorderseite ausgelöst oder betätigt werden, um eine möglichst geringe Kontaminierung/Fremdeinwirkung auf den Innenbereich zu erreichen.

Mit Vorteil ist als Betätigungsmittel mindestens eine in Richtung des Außenbereichs gerichtete Anlaufschräge an der Trennwand vorgesehen. Die Anlaufschräge ist dabei bevorzugt an der Trennwandunterkante angebracht. Die Anlaufschräge kann sich über die gesamte Trennwandbreite erstrecken.

Alternativ zu der/den Anlaufschräge(n) können in Einsteckrichtung rotierende, an der Trennwand angebrachte Rollen als Betätigungsmittel vorgesehen sein. Hierdurch wird die Karte beim Einschieben geschont.

Die Betätigungsmittel stehen in vorteilhafter Ausgestaltung in Richtung der zu der Karte beim Einschieben der Karte gerichteten Stirnfläche der Trennwand hervor, um einen Verschleiß der Karte möglichst zu vermeiden. Der Verschleiß ist besonders gering, wenn hierbei als Betätigungsmittel die oben beschriebenen Rollen verwendet werden.

In einer bevorzugten Ausführungsform ist je eine der Anlaufschrägen einem linken und rechten Seitenrandbereich der Karte zugeordnet, wobei die Trennwand durch die Seitenrandbereiche beim Einschieben der Karte betätigbar ist. Hierdurch ist gewährleistet, dass nur ein sich über annähernd die gesamte Breite des Kartenaufnahmeraums erstreckender Gegenstand, der geeignet ist, die Anlaufschrägen und damit die Trennwand zu betätigen, in den Innenbereich eingesteckt werden kann.

Zur Rückstellung der Trennwand nach Herausziehen der Karte sowie zum Erschweren des Eindringens artfremder Gegenstände ist die Trennwand entgegen der Öffnen-Richtung federbelastet, wobei besonders vorteilhaft ein Federdraht verwendet wird. Ein Federdraht nimmt besonders bei der erfindungsgemäß vorgesehenen Linearbewegung der Trennwand einen geringstmöglichen Raum ein und gewährleistet eine dauerhafte Funktion des Trennwandmechanismusses.

In einer weiteren bevorzugten Ausführungsform der Erfindung ist vorgesehen, dass die Trennwandführungsmittel, insbesondere abgewinkelte, vorzugsweise mit je einem Anschlag in Einsteckrichtung der Karte versehene Führungsnuten umfassen, die, vorzugsweise einstückig, an den Kartenaufnahmeraum begrenzenden Seitenwänden angebracht sind.

Durch die seitlichen Führungsnuten ist eine Platz sparende Linearführung der Trennwand möglich. Durch die in Einsteckrichtung vorgesehenen Anschläge und bevorzugt in Kombination mit einer Abwinkelung wird ein gewaltsames "Durchbrechen" der Trennwand weitgehend ausgeschlossen. Quer entlang der gesamten Trennwand kann eine Verstärkungsrippe vorgesehen sein, die für eine weitere Verstärkung der Trennwand in Einsteckrichtung sorgt.

Soweit der Federdraht mit definierter Vorspannung in der Trennstellung zum einen mit beiden Federdrahtenden gegen je einen an den Seitenwänden vorgesehenen Anschlag in der Öffnen-Richtung anliegend angeordnet ist und zum anderen an mindestens einem zwischen den Federdrahtenden angeordneten Gegenanschlag entgegen der Öffnen-Richtung anliegend angeordnet ist, ist auf einfache Weise eine auf die Trennwand in Richtung Trennstellung, d.h. entgegen der Öffnen-Richtung wirkende definierte Kraft realisierbar. Darüber hinaus kann der Federdraht denkbar einfach ausgestaltet sein, nämlich als gerader Federstahlstift, der besonders günstig massengefertigt werden kann. Auch das Montieren des Federdrahts ist denkbar einfach.

Die Manipulierbarkeit wird noch mehr erhöht, indem an einem den Kartenaufnahmeraum nach unten begrenzenden Boden Rastmittel, insbesondere eine Rastnut, zur Blockierung der Trennwand in Einsteckrichtung der Karte vorgesehen sind. Somit ist erst nach Anheben der Trennwand die Blockierung der Trennwand zumindest in Bezug auf die Unterkante in Richtung des Innenbereichs aufgehoben. Die oben beschriebenen Blockiermittel wie Anschläge und Verstärkungsrippen wirken auch in der Schreib-/Lesestellung.

Weitere Vorteile und zweckmäßige Ausführungen der Erfindung sind in den weiteren Ansprüchen, den Figuren, der Beschreibung und der Figurenbeschreibung wiedergegeben, wobei die Figuren zeigen:
- Fig. 1:: Eine perspektivische Darstellung der erfindungsgemäßen Kartenlese- und/oder Schreibeinheit im Ausschnitt in einer Trennstellung bei teilweise in den Außenbereich eingeschobener Karte,

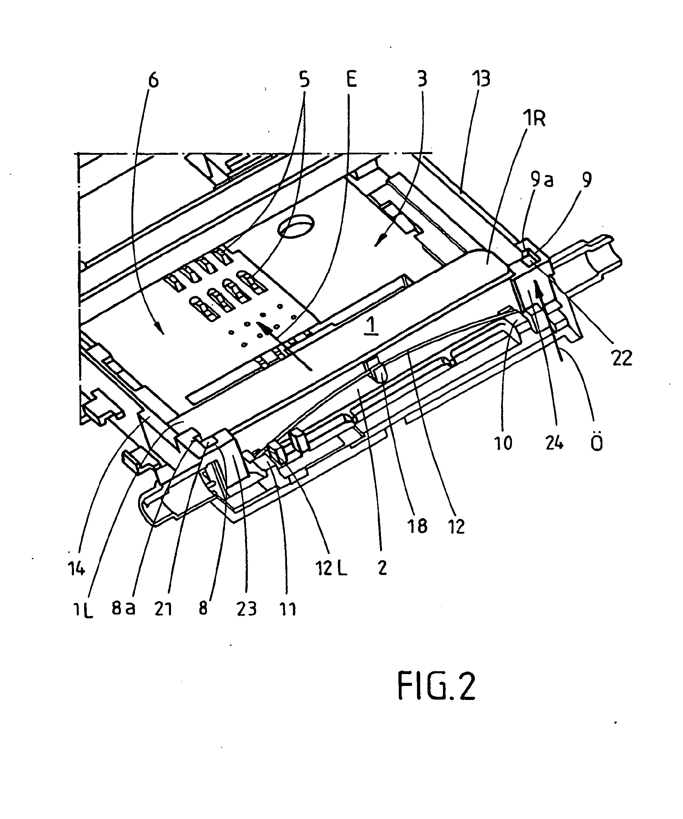

- Fig. 2:: eine geschnittene, perspektivische Ansicht der Kartenlese- und/oder Schreibeinheit im Ausschnitt mit teilweise in den Innenbereich eingeschobener Karte und betätigter Innenwand in Schreib-/Lesestellung,
- Fig. 3:: Aufsicht auf die erfindungsgemäße Kartenlese- und/oder Schreibeinheit im Ausschnitt,
- Fig. 4:: ausschnittsweise Schnittdarstellung der erfindungsgemäßen Kartenlese- und/oder Schreibeinheit in Trennstellung gemäß Schnittlinie A-A aus Fig. 3,
- Fig. 5:: ausschnittsweise Schnittdarstellung der erfindungsgemäßen Kartenlese- und/oder Schreibeinheit in Trennstellung gemäß Schnittlinie B-B aus Fig. 3,
- Fig. 6:: ausschnittsweise Schnittdarstellung der erfindungsgemäßen Kartenlese- und/oder Schreibeinheit in Schreib-/Lesestellung entlang Schnittlinie B-B aus Fig. 3.

In den Figuren sind gleiche oder gleich wirkende Teile mit gleichen Bezugszeichen gekennzeichnet.

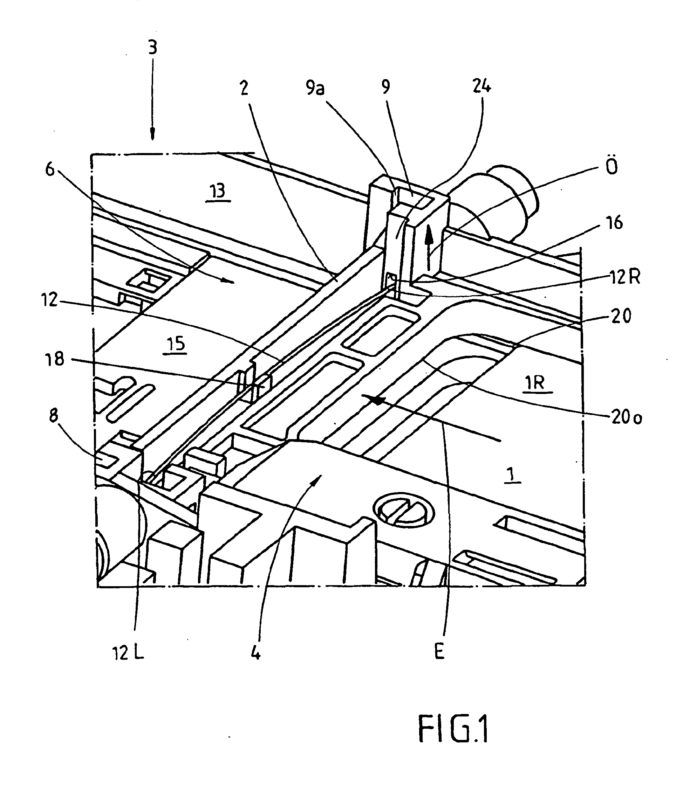

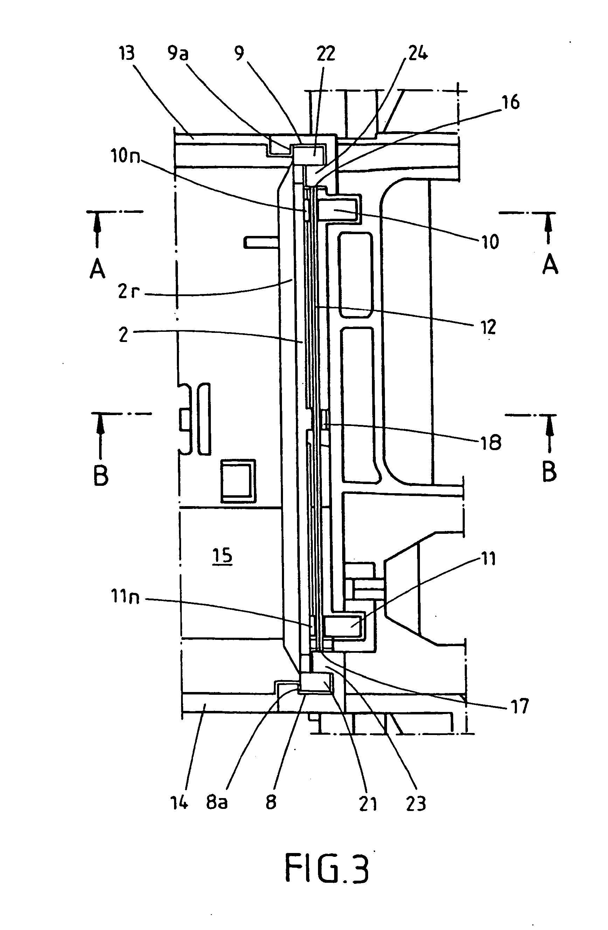

In Fig. 1 ist eine Kartenlese- und/oder Schreibeinheit zum Lesen und/oder Schreiben von Informationen von einer Karte 1, hier Smartcard, abgebildet, die einen durch ein nicht vollständig dargestelltes Umgehäuse gebildeten Kartenaufnahmeraum 6 aufweist. Seitlich ist der Kartenaufnahmeraum 6 durch Seitenwände 13 und 14 (siehe Fig. 3) begrenzt, während der Kartenaufnahmeraum 6 nach unten von dem Boden 15 begrenzt ist.

Der Kartenaufnahmeraum 6 ist durch eine Trennwand 2 in der in Fig. 1 dargestellten Trennstellung in einen Außenbereich 4 und einen Innenbereich 3 getrennt. Nach oben ist der Kartenaufnahmeraum 6 durch einen Deckel (nicht dargestellt) verschließbar.

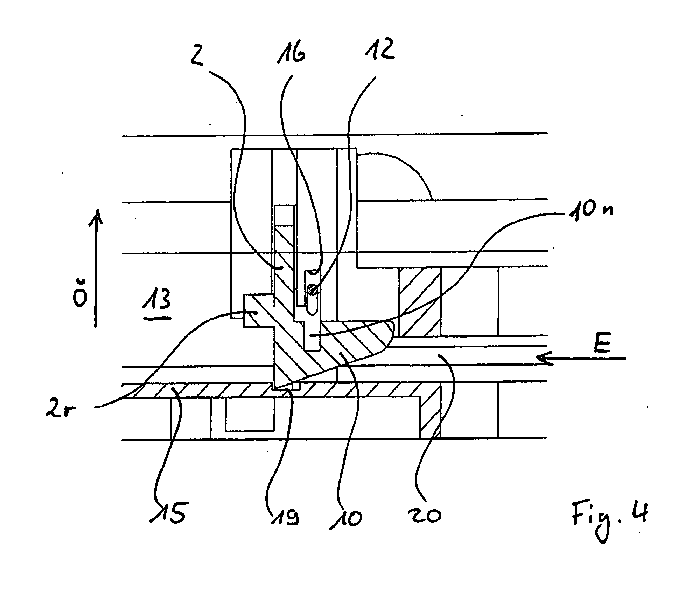

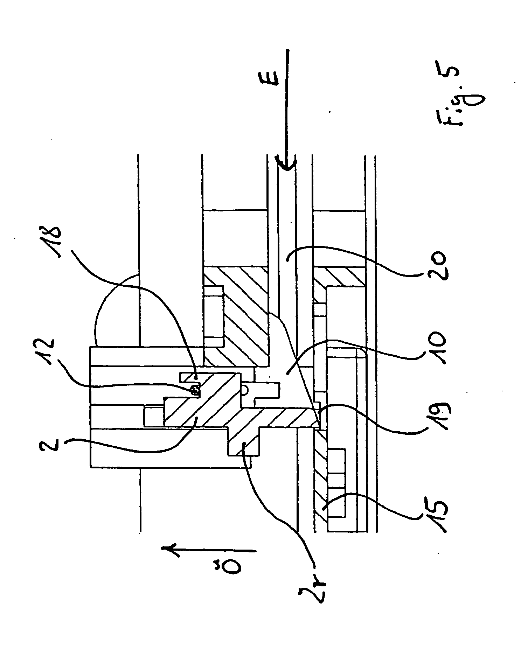

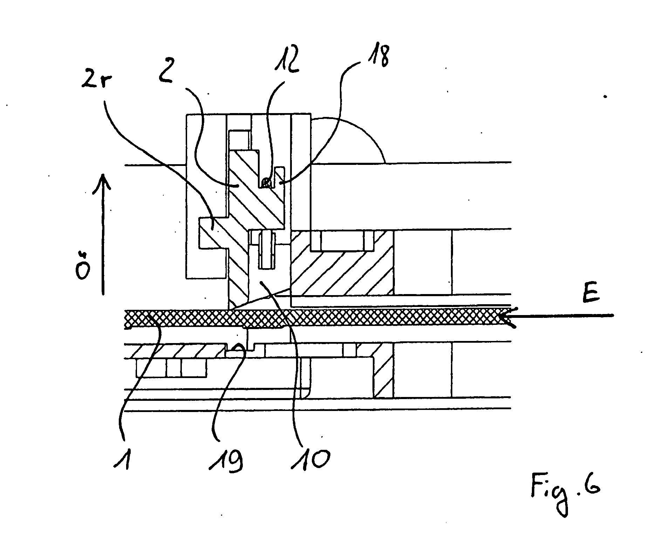

Die Trennwand 2 ist seitlich in zwei Führungsnuten 8, 9 geführt und kann demnach entlang der Führungen 8, 9 nach oben und unten bewegt werden. Die Bewegung ist nach oben durch den nicht dargestellten Deckel und nach unten durch eine Rastnut 19 (siehe Fig. 4, 5, 6) begrenzt. Die Bewegung ist derart begrenzt, dass die Trennwand 2 bündig mit einer Oberkante 20o einer Kartenführung 20 ist.

Die Trennwand 2 ist durch einen Federdraht 12, der unbelastet gerade ist, federbelastet, wobei der Federdraht 12 in der in Fig. 1 gezeigten Trennstellung der Trennwand 2 zwischen zwei Anschlägen 16 und 17 und einem Gegenanschlag 18 vorgespannt befestigt angeordnet ist. Der Federdraht 12 ist entlang der Trennwand 2 und parallel zu dieser eingespannt. Während ein rechtes Federdrahtende 12R des Federdrahts 12 an dem Anschlag 16 anliegt, der an einem die Führungsnut 9 bildenden Vorsprung 24 der Seitenwand 13 eingeformt ist, ist ein linkes Federdrahtende 12L des Federdrahts 12 gegenüberliegend und spiegelverkehrt zum rechten Federdrahtende 12R an einen Anschlag 17 angelegt (siehe Fig. 3).

Die Trennwand 2 wird durch an der Trennwand 2 links und rechts angegbrachte Anlaufschrägen 10, 11 in Zusammenwirken mit dem Einschieben der Karte 1 durch deren linken Seitenrandbereich 1L und rechten Seitenrandbereich 1R angehoben, wodurch die Karte 1 vom Außenbereich 4 in den Innenbereich 3 eingeschoben werden kann. Die Anlaufschrägen 10, 11 sind nach unten in Richtung der Karte 1 gerichtet. Die Einsteckrichtung der Karte ist mit dem Pfeil E gekennzeichnet, während die Öffnen-Richtung der Trennwand 2 mit dem mit Bezugszeichen Ö gekennzeichneten Pfeil dargestellt ist.

Die Trennwand 2 (Fig. 3 bis Fig. 6) wird durch eine in Richtung des Innenbereichs 3 gerichtete Verstärkungsrippe 2R verstärkt. Hierdurch wird ein Durchbiegen der Trennwand 2 durch Gewalteinwirkung verhindert. Ein Herausspringen der Trennwand 2 aus den Führungsnuten 8, 9 wird dadurch verhindert, dass die Führungsnuten 8, 9 und die korrespondierenden Führungsfedern 21, 22 der Trennwand 2 angewinkelt sind und Anschläge 8a, 9a an den Führungsnuten 8, 9 angeformt sind, gegen die sich die Trennwand 2 in Richtung des Innenbereichs 3 abstützt.

Der Federdraht 12 ist zusätzlich durch in den Anlaufschrägen 10, 11 eingeformte Nuten 10n, 11n geführt, um ein Herausspringen des Federdrahts 12 beim Betätigen der Trennwand 2 zu verhindern. Darüber hinaus ist der Federdraht 12 in dem Gegenanschlag 18 ebenfalls nutförmig geführt. Die Anschläge 16, 17 sind als Ausnehmungen in den die Führungsnuten 8, 9 bildenden Vorsprüngen 23, 24 der Seitenwände 13, 14 ausgebildet und verhindern ebenfalls ein Herausspringen des unter Spannung stehenden Federdrahts 12.

In den Figuren 4, 5 und 6 wird insbesondere die Funktionsweise der Anlaufschrägen 10, 11 und der Rastnut 19 deutlich.

### Bezugszeichenliste

- 1: Karte (Smartcard)
- 1L: linker Seitenrandbereich
- 1R: rechter Seitenrandbereich
- 2: Trennwand
- 2r: Verstärkungsrippe
- 3: Innenbereich
- 4: Außenbereich
- 5: Lese-/Schreibanschlüsse
- 6: Kartenaufnahmeraum
- 7: Trennwandführungsmittel
- 8: Führungsnut
- 8a: Anschlag
- 9: Führungsnut
- 9a: Anschlag
- 10: Anlaufschräge
- 10n: Nut
- 11: Anlaufschräge
- 11n: Nut
- 12: Federdraht
- 12R: Federdrahtende
- 12L: Federdrahtende
- 13: Seitenwand
- 14: Seitenwand

- 15: Boden
- 16: Anschlag
- 17: Anschlag
- 18: Gegenanschlag
- 19: Rastnut
- 20: Kartenführung
- 20o: Oberkante
- 21: Führungsfeder
- 22: Führungsfeder
- 23: Vorsprung
- 24: Vorsprung

- E: Einsteckrichtung
- Ö: Öffnen-Richtung

## Patentansprüche

1. Kartenlese- und/oder Schreibeinheit zum Lesen und/oder Schreiben von Informationen von einer Karte (1) und/oder auf eine Karte (1), insbesondere Smartcard, mit einem durch eine! quer zu einer Einsteckrichtung (E) der Karte (1) zwischen einer Trennstellung und einer Schreib-/Lesestellung hin und her verschiebbar angeordnete Trennwand (2) in einen Innenbereich (3) mit Lese- und/oder Schreibanschlüssen (5) und einen Außenbereich (4) trennbaren, insbesondere schlitzförmigen, Kartenaufnahmeraum (6),
**dadurch gekennzeichnet, dass**
die Trennwand (2) entgegen der Öffnen-Richtung (Ö) durch einen Federdraht (12), welcher in Trennstellung eine definierte Vorspannung aufweist, federbelastet ist, wobei der Federdraht (12)
- mit beiden Federdrahtenden (12L, 12R) gegen je einen an den Seitenwänden (13, 14) vorgesehenen Anschlag (16, 17) in der Öffnen-Richtung (Ö)anliegend angeordnet ist und
- an mindestens einem zwischen den Federdrahtenden (12R, 12L) angeordneten Gegenanschlag (18) entgegen der Öffnen-Richtung (Ö) anliegend angeordnet ist.

2. Kartenlese- und/oder Schreibeinheit nach Anspruch 1, bei der Betätigungsmittel (10, 11) zur Verschiebung der Trennwand (2) in einer Öffnen-Richtung (Ö) von der Trennstellung in die Schreib-/Lesestellung, insbesondere an der Trennwand (2) angebracht, vorgesehen sind, wobei die Betätigungsmittel (10, 11) vorzugsweise durch Einschieben der Karte (1) in den Kartenaufnahmeraum (6) auslösbar oder betätigbar sind.

3. Kärtenlese- und/oder Schreibeinheit nach Anspruch 2, bei der als Betätigungsmittel (10, 11) mindestens eine in Richtung des Außenbereichs (4) gerichtete Anlaufschräge (10, 11) an der Trennwand (2) vorgesehen ist.

4. Kartenlese- und/oder Schreibeinheit nach Anspruch 3, bei der je eine der Anlaufschrägen (10, 11) einem linken und rechten Seitenrandbereich (1L, 1R) der Karte (1) zugeordnet ist, wobei die Trennwand (2) durch die Seitenrandbereiche (1L, 1R) beim Einschieben der Karte (1) betätigbar ist.

5. Kartenlese- und/oder Schreibeinheit nach einem der vorhergehenden Ansprüche, bei der die Trennwand (2) an Trennwandführungsmitteln (7) entlang geführt ist.

6. Kartenlese- und/oder Schreibeinheit nach einem der vorhergehenden Ansprüche, bei der die Trennwandführungsmittel (7) zwei, insbesondere abgewinkelte, vorzugsweise mit je einem Anschlag (8a, 9a) in Einsteckrichtung (E) der Karte (1) versehene, Führungsnuten (8, 9) umfassen, die, vorzugsweise einstückig, an den Kartenaufnahmeraum (6) begrenzenden Seitenwänden (13, 14) angebracht sind.

7. Kartenlese- und/oder Schreibeinheit nach einem der vorhergehenden Ansprüche, bei der an einem den Kartenaufnahmeraum (6) nach unten begrenzenden Boden (15) Rastmittel (19), insbesondere eine Rastnut (19), zur Blockierung der Trennwand (2) in Einsteckrichtung (E) der Karte (1) vorgesehen sind.

8. Vorrichtung mit einer Kartenlese- und/oder Schreibeinheit nach einem der vorhergehenden Ansprüche.

## Claims

1. Card reading and/or writing unit for reading and/or writing of information from a card (1) and/or onto a card (1), especially a smart card, with an especially slot-shaped card receiving space (6) which can be separated by a partition (2) which is arranged to be able to move back and forth between a separation position and a write/read position transversely to the insertion direction (E) of the card (1) into an inner region (3) with reading and/or writing connections (5) and an outer region (4), **characterized in that** the partition (2) is spring-loaded opposite the opening direction (Ö) by a spring wire (12) which has a defined pretensioning in the separation position, the spring wire (12)
- being arranged with the two spring wire ends (12L, 12R) fitting closely against one stop (16, 17) each provided on the side walls (13, 14) in the opening direction (Ö) and
- being arranged adjoining at least one opposite stop (18) located between the spring wire ends (12R, 12L) opposite the opening direction (Ö).

2. Card reading and/or writing unit as claimed in claim 1, wherein there are actuating means (10, 11) for displacement of the partition (2) in one opening direction (Ö) from the separating position into the writing/reading position, especially attached to the partition (2), and the actuating means (10, 11) can preferably be triggered or actuated preferably by inserting the card (1) into the card receiving space (6).

3. Card reading and/or writing unit as claimed in claim 2, wherein the actuating means (10, 11) is at least one stop bevel (10, 11) pointed in the direction of the outer region (4) on the partition (2).

4. Card reading and/or writing unit as claimed in claim 3, wherein one of the stop bevels (10, 11) at a time is assigned to a left and a right side edge region (1L, 1R) of the card (1), and the partition (2) can be actuated by the side edge regions (1L, 1R) when the card (1) is inserted.

5. Card reading and/or writing unit as claimed in one of the preceding claims, wherein the partition (2) is guided along partition guide means (7).

6. Card reading and/or writing unit as claimed in one of the preceding claims, wherein the partition guide means (7) comprise two, especially bent guide grooves (8, 9) which are preferably provided with one stop (8a, 9a) each in the insertion direction (E) of the card (1) and which are attached preferably integrally to the side walls (13, 14) which border the card receiving space (6).

7. Card reading and/or writing unit as claimed in one of the preceding claims, wherein on the bottom (15) which borders the card receiving space (6) downward there are catch means (19), especially a catch groove (19), for blocking the partition (2) in the insertion direction (E) of the card (1).

8. Device with a card reading and/or writing unit as claimed in one of the preceding claims.

## Revendications

1. Unité de lecture de carte et/ou d'inscription pour la lecture et/ou l'inscription d'informations d'une carte (1) et/ou sur une carte (1), notamment une carte à puce, comportant une paroi séparatrice (2) disposée de manière à aller et venir transversalement par rapport à un sens de fichage (E) de la carte (1) entre une position de séparation et une position d'inscription/lecture vers un espace récepteur de carte (6), notamment en forme de fente, séparable en une zone intérieure (3) comportant des raccordements de lecture et/ou d'écriture (5) et une zone extérieure (4),
**caractérisée en ce que**
la paroi séparatrice (2) est chargée par ressort dans le sens inverse au sens d'ouverture (Ö) par un fil à ressort (12) qui présente, en position de séparation, une précontrainte définie, le fil à ressort (12)
- étant disposé par ses deux extrémités de fil à ressort (12L, 12R) chaque fois contre une butée (16, 17) prévue au niveau des parois latérales (13, 14) dans le sens d'ouverture (Ö) et
- étant disposé couché au niveau d'au moins une contre-butée (18) disposée entre les extrémités du fil à ressort (12L, 12R) dans le sens inverse au sens d'ouverture (Ö).

2. Unité de lecture de carte et/ou d'inscription selon la revendication 1, dans laquelle il est prévu des moyens d'actionnement (10, 11) pour déplacer la paroi séparatrice (2) dans un sens d'ouverture (Ö) de la position de séparation vers la position d'inscription/lecture, notamment au niveau de la paroi séparatrice (2), les moyens d'actionnement (10, 11) pouvant de préférence être déclenchés ou actionnés en insérant la carte (1) dans l'espace récepteur de carte (6).

3. Unité de lecture de carte et/ou d'inscription selon la revendication 2, dans laquelle il est prévu comme moyens d'actionnement (10, 11) au moins une pente d'arrivée (10, 11) dirigée dans le sens de la zone extérieure (4) au niveau de la paroi séparatrice (2).

4. Unité de lecture de carte et/ou d'inscription selon la revendication 3, dans laquelle chacune des pentes d'arrivée (10, 11) est associée à une zone périphérique latérale gauche et droite (1L, 1R) de la carte (1), la paroi séparatrice (2) pouvant être actionnée par les zones périphériques latérales (1L, 1R) lors de l'insertion de la carte (1).

5. Unité de lecture de carte et/ou d'inscription selon une des revendications précédentes, dans laquelle la paroi séparatrice (2) est guidée le long de moyens de guidage de paroi séparatrice (7).

6. Unité de lecture de carte et/ou d'inscription selon une des revendications précédentes, dans laquelle les moyens de guidage de paroi séparatrice (7) comprennent deux rainures de guidage (8, 9) notamment coudées et pourvues de préférence chacune d'une butée (8a, 9a) dans le sens de fichage (E) de la carte, qui sont installées de préférence en un bloc au niveau des parois latérales (13, 14) limitant l'espace récepteur de carte (6).

7. Unité de lecture de carte et/ou d'inscription selon une des revendications précédentes, dans laquelle, au niveau d'un fond (15) limitant l'espace récepteur de carte (6) vers le bas, il est prévu des moyens d'enclenchement (19), notamment une rainure d'enclenchement (19), pour bloquer la paroi séparatrice (2) dans le sens de fichage (E) de la carte (1).

8. Dispositif comportant une unité de lecture de carte et/ou d'inscription selon une des revendications précédentes.
